# EUROPEAN PATENT APPLICATION

(11) **EP 3 270 491 A1**
(43) Date of publication of application: **17.01.2018**
(21) Application number: 16179747.7
(22) Date of filing: 15.07.2016
(51) Int. Cl.: H02K 7/18, H02K 9/04, H02K 9/16, H02K 21/22

(54) **COOLING ARRANGEMENT OF A WIND TURBINE GENERATOR**

(71) Applicant: Siemens Aktiengesellschaft, 80333 München (DE)
(72) Inventor: Gundtoft, Soeren, 7000 Fredericia (DK)

(57) **Abstract**

The invention describes a cooling arrangement (1) of a wind turbine generator (3) having an outer rotor (22) arranged about a stator (31) mounted to a shaft (23) by means of a drive-end stator plate (31F) and a non-drive-end stator plate (31B), and a outer rotor (22), which cooling arrangement (1) comprises an annular outer mantle (10) arranged about the outer rotor (22) to form an mantle cavity (10_int) between the mantle (10) and the outer rotor (22); a number of air ducts (313) in the body of the stator (31) extending from a generator air-gap (G) into a stator interior cavity (31_int); and an intake path leading a cooling airflow (C) into the mantle cavity (10_int), from the mantle cavity (10_int) into the generator air-gap (G), and through the stator air ducts (313) into the stator interior cavity (31_int). The invention further describes a direct-drive wind turbine (2) with a generator (3) and such a cooling arrangement (1) to cool the generator (3). The invention further describes a method of cooling a wind turbine generator (3).

## Description

The invention describes a cooling arrangement of a wind turbine, a wind turbine comprising such a cooling arrangement, and a method of cooling the generator of a wind turbine.

During operation of a wind turbine, high temperatures can be reached in the generator windings on account of the large currents induced in the windings. For various reasons, it is important to keep the temperatures in the generator to within reasonable limits. One important aspect is that the hot windings are located very close to the generator magnets over the narrow air-gap between stator and rotor. However, the magnet performance can be negatively affected by excessive heat. If the magnets are exposed to too high temperatures, they may suffer damage, and the power output of the generator may be reduced.

Therefore, much effort is invested in the development of efficient cooling systems for wind turbine generators. In the case of a direct-drive wind turbine, which generally comprises an outer rotor that rotates about an inner stator, efficient cooling is made difficult by the compact design at the drive end. The hub is connected to the outer rotor at the drive end by means of a rotor frontplate that joins to the cylindrical outer rotor, so that the hub and outer rotor move as one. The inner stator is generally mounted about a shaft that leads into the nacelle for connection to the yaw system of the wind turbine. Only a relatively small space remains between the rotor frontplate and the generator components, and it is not practicable to arrange components of a cooling system in this front-end cavity. In one approach to cooling such a generator, bypass channels may lead through a stator interior cavity from the non-drive-end to the drive-end in order to convey cool air from the non-drive-end into the front-end cavity. This type of construction requires significant design alterations to the stator assembly, and may therefore be considered too costly. Furthermore, since the stator interior is also quite hot, the cooling airflow is heated to some extent as it passes through the bypass channels, thereby losing some of its effectiveness.

It is therefore an object of the invention to provide a more economical way of cooling a direct-drive wind turbine.

This object is achieved by the cooling arrangement of claim 1; by the direct-drive wind turbine of claim 12; and by the method of claim 15 of cooling a wind turbine generator.

In the context of the invention, a wind turbine generator is assumed to have an outer rotor arranged about a stator assembly, which comprises a stator mounted about a stationary shaft by means of a drive-end stator plate (also referred to as the stator frontplate in the following) and a non-drive-end stator plate (also referred to as the stator backplate in the following). In this type of wind turbine construction, the hub (to which the blades are mounted) is joined to the outer rotor by a rotor frontplate, so that the hub and outer rotor rotate as one.

According to the invention, a cooling arrangement of such a wind turbine generator comprises an annular cylindrical outer mantle arranged about the outer rotor to form an mantle cavity between the mantle and the outer rotor; a number of air ducts or channels extending through the body of the stator from a generator air-gap into a stator interior cavity; and an intake path leading a cooling airflow into the mantle cavity, from the mantle cavity into the generator air-gap, and through the air ducts in the stator into the stator interior cavity.

According to the invention, the method of cooling such a wind turbine generator comprises the steps of arranging an annular outer mantle around the outer rotor to form an mantle cavity between the mantle and the outer rotor; forming a number of air ducts in the body of the stator to extend from a generator air-gap into a stator interior cavity; and providing an intake path to lead a cooling airflow into the mantle cavity, from the mantle cavity into the generator air-gap, and through the stator air ducts into the stator interior cavity.

An advantage of the inventive cooling arrangement and the inventive method is that an efficient cooling of the stator windings can be achieved at favourably low cost and with a favourably low effort. It is relatively straightforward to arrange such a mantle about the outer rotor, so that cooling airflow can be brought to the drive-end of the generator with relatively little effort. Furthermore, since the cooling airflow does not pass over any hot components on its way from one end of the mantle cavity to the other end, the cooling airflow is still favourably cold by the time it enters the airgap.

According to the invention, a direct-drive wind turbine comprises the inventive cooling arrangement to cool its generator. By ensuring that the airflow is favourably cool when it enters the airgap at either end, the cooling airflow can efficiently cool the windings and keep the magnet temperature within acceptable limits. Since the winding temperatures and magnet temperatures can be kept within favourably low limits, other components of the generator are also protected from over-heating.

Particularly advantageous embodiments and features of the invention are given by the dependent claims, as revealed in the following description. Features of different claim categories may be combined as appropriate to give further embodiments not described herein.

The outer mantle can be made of any suitable material that is lightweight and robust, for example sheet metal or fibreglass. The outer mantle is arranged to partially enclose the outer rotor, for example the mantle may comprise a cylindrical structure that encloses the cylindrical outer rotor. The outer rotor rotates with the hub, and there is generally a space between the rotatable outer rotor and the stationary canopy (the canopy is stationary relative to the rotatable hub/rotor assembly). In one preferred embodiment of the invention, the outer mantle is mounted to the outer rotor, for example at the drive-end of the outer rotor. The mantle can extend in a downwind direction over the canopy. In such an embodiment, the wind turbine preferably comprises a seal such as a labyrinth seal between the mantle and the canopy, to prevent moisture or airborne particles from entering the wind turbine interior through the space between outer rotor and canopy. In an alternative embodiment, the outer mantle is mounted to the canopy and extends in an upwind direction over the outer rotor, and a seal is arranged between the mantle and the outer rotor in this case.

As indicated above, the stator assembly comprises a cylindrical stator body which is mounted at a certain distance from a supporting structure by a stator frontplate (at the drive end of the generator) and a stator backplate (at the non-drive-end of the generator). The stator body may be assumed to comprise a plurality of longitudinal slots for holding the windings. The windings extend beyond the edges of the stator at the drive-end and the non-drive-end. Each winding undergoes a 180° fold, while the windings of the different phases are interleaved. The resulting interleaved and folded winding end sections extending beyond each end of the stator are referred to collectively as the "winding overhang". The stator body may be a solid body, or may be constructed using a laminate stack. In a direct-drive wind turbine, the hub is mounted to a stationary shaft by means of a suitable bearing arrangement. The supporting structure can be in the form of a fixed shaft extending from the hub through the stator assembly. In one type of wind turbine design, the fixed shaft can be bent or curved between the generator and the top of the wind turbine tower, so that it can connect to a yaw drive. At the front end of the generator, between the drive-end stator plate and the rotor frontplate joining the hub and rotor, an annular cavity extends around the fixed shaft. This cavity may be referred to in the following as the front-end cavity or front-end space.

The rotor assembly of a direct-drive wind turbine generally comprises a cylindrical outer rotor with a plurality of magnets arranged about its interior so that the magnets face the windings across a narrow air-gap, which usually measures only a few millimetres. To be able to halt the rotor, the rotor assembly may be assumed to comprise an annular brake plate mounted to the non-drive end of the rotor assembly. The brake plate may be assumed to be perpendicular to the rotor body.

The mantle cavity formed between the mantle and the outer rotor extends essentially over the entire length of the outer rotor, i.e. between the drive-end and the non-drive-end of the outer rotor. The depth of the mantle cavity is the difference between the inner mantle diameter and the outer rotor diameter, and the mantle cavity is preferably "deep" enough to allow a sufficient volume or quantity of cooling air to pass through. To this end, the mantle cavity preferably has a depth of at least 3 cm, more preferably at least 6 cm.

In the inventive cooling arrangement, the mantle cavity is connected in some suitable manner with the generator airgap. To this end, the cooling arrangement preferably comprises an airflow passage connecting the mantle cavity with the generator air-gap. For example, radial through-holes could be formed from the outer surface of the outer rotor, extending through the rotor body to open into the airgap. Such radial through-holes would be arranged to extend between adjacent magnets. However, in a preferred approach, an airflow passage comprises a number of outer rotor openings at the drive-end of the outer rotor. Such an opening can be formed radially in the cylindrical outer rotor portion. When formed at the drive end, i.e. at the windward edge of the outer rotor, a outer rotor opening opens into the front-end cavity defined by the rotor frontplate and the stator frontplate.

As described above, the windings are arranged in slots extending along the length of the stator body. The hot windings will also heat the stator body during operation of the generator. With the inventive cooling arrangement, the windings and stator body are effectively cooled by the cooling airflow that has been guided into the airgap to pass through the air ducts in the stator body directly into the stator interior. A channel or air-duct preferably extends through the stator body in an essentially radial direction from the air-gap into the stator interior. Any number or distribution of such radial air ducts may be used, for example three such radial air ducts may be formed along a single winding slot, and may be equidistantly arranged along the length of the winding slot, or may be arranged at irregular intervals. One or more such air ducts may be formed in each winding slot, or only in alternate winding slots, etc., depending on the cooling requirements of the generator.

Ambient air temperatures are generally significantly lower than the winding temperatures during operation of the generator, and the cooling airflow is preferably obtained from ambient air. To this end, in a preferred embodiment of the invention, the cooling arrangement comprises an air intake assembly arranged to draw cool air into a nacelle interior of the wind turbine. Airborne particles may be present in the ambient air. Therefore, the air intake assembly may include a filter arrangement to ensure that only clean enters the generator. To avoid corrosion damage and to avoid condensation on the magnets and windings if these are cooler than the ambient air (e.g. during startup in cold weather), the air intake assembly may also include a drying arrangement to remove any moisture from the cooling airflow before it enters the generator.

As indicated above, the windings extend beyond the stator at either end in a drive-end winding overhang and a non-drive-end winding overhang. These nested and folded winding regions are usually difficult to cool, since an airflow will tend to simply pass over a winding overhang. Therefore, in a further preferred embodiment of the invention, the cooling arrangement comprises one or more airflow guides to guide a cooling airflow over a winding overhang. In one preferred embodiment of the invention, such a guide may be realised as a kind of skirt of a suitable material arranged to direct the cooling airflow between the drive-end winding overhang and a front wall of the outer rotor, so that the cooling airflow is then forced to pass through the narrow spaces in the front-end winding overhang before it can enter the airgap.

At the non-drive end of a direct-drive wind turbine generator, a brake plate is generally connected to the rotor. In one realisation, the brake plate may extend from the outer edge of the rotor housing to cover the winding overhang region. In such a design, the brake plate acts as an airflow guide to compel the cooling air intake to pass through the non-drive-end winding overhang before it can enter the airgap. In this way, the winding overhang at the non-drive end is also effectively cooled.

The heated air entering the stator interior through the openings in the stator frontplate (and through the radial air ducts) is preferably removed continually in order to maintain a high degree of cooling efficiency. The heated air should also be prevented from re-entering the generator. To this end, in a preferred embodiment of the invention the extraction assembly comprises an exit duct arranged to provide a closed passageway for the heated airflow from the stator backplate opening to the exterior of the wind turbine. Any number of exit ducts may be arranged to offer the heated air a passage from the stator interior. As mentioned above, the stator interior may be an annular cavity surrounding a supporting structure such as a fixed shaft. Owing to convection, the hot air may then tend to rise to the upper level in the stator interior. Therefore, in a further preferred embodiment of the invention, an exit duct is arranged to leave the stator backplate from a level in the upper half of the stator assembly. For example, an exit opening may be provided towards the upper region of the stator backplate, so that the hot air accumulating near the "roof" of the stator interior can effectively be guided out of the stator interior. Of course, further exit ducts may be provided, with corresponding further exit openings in the stator backplate, so that the heated air can leave the stator interior over a number of exit paths.

An exit duct may extend from an exit opening in the stator backplate to an air outlet from the canopy. Such an exit duct can comprise a tube or hose with a suitably large diameter, and can be arranged as required in the canopy interior so that the heated air can pass unhindered to the outside. An air outlet from the canopy to the exterior is preferably arranged so that the expelled hot air does not immediately re-enter through the air intake.

The inventive cooling arrangement may be entirely passive, i.e. any movement of the airflow from air intake to air outlet may arise from pressure differences, temperature differences, and the rotational movement of the rotor. It may be desirable to increase the flow rate of the cooling air, for example during operation at or above rated power output. To this end, in a preferred embodiment of the invention, the cooling arrangement comprises one or more intake fans arranged to draw the cooling airflow towards the mantle cavity and/or one or more extraction fans draw the heated airflow out of the stator interior and into the exit duct and/or an outlet fan arranged at an outlet opening in the canopy of the wind turbine to expel the heated air from the exit duct.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a first embodiment of the cooling arrangement according to the invention;
Fig. 2 shows a second embodiment of the cooling arrangement according to the invention;
Fig. 3 shows a third embodiment of the cooling arrangement according to the invention.

In the diagrams, like numbers refer to like objects throughout. Objects in the diagrams are not necessarily drawn to scale.

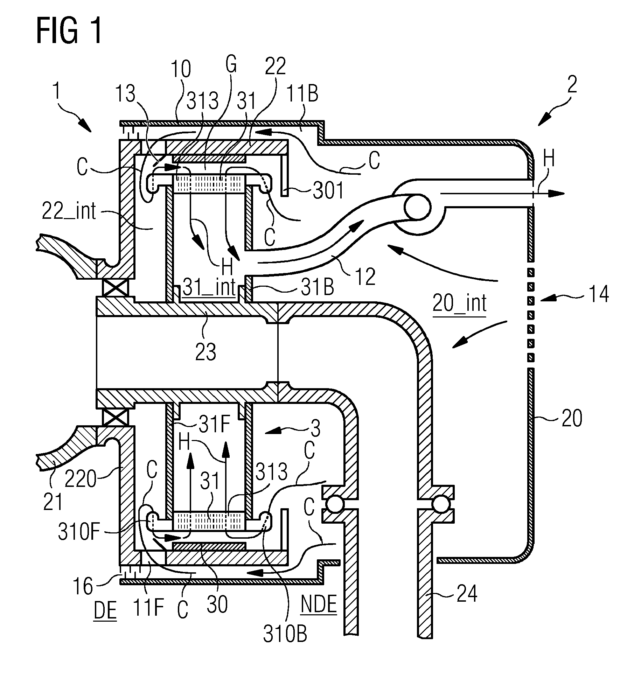

Fig. 1 shows an exemplary embodiment of the inventive cooling arrangement 1. The diagram shows only the relevant elements of a direct-drive wind turbine 2, and indicates a generator 3 with an outer rotor 22 turned by a hub 21 to which it is attached by means of a rotor frontplate 220. The hub 21 is turned by blades (not shown) that are mounted to the hub 21. The inner stator assembly of the generator 3 comprises a stator body 31 mounted about the shaft 23 by a drive-end stator plate 31F or frontplate 31F and a non-drive-end stator plate 31B or backplate 31B, defining a stator interior cavity 31_int. In this exemplary embodiment, the stator body is constructed from a laminate stack, and radial air ducts 313 extend through the stator body 31 to link the airgap G with the stator interior 31_int.

The hub 21 is mounted to a stationary shaft 23 by a bearing. The shaft 23 is connected to a further supporting element or "neck" that interfaces to a tower 24 by a yaw drive, as will be known to the skilled person. The rotor 22 rotates during operation of the wind turbine generator 2, and can be halted by a brake mechanism that engages with a brake plate 301. A canopy 20 encloses various components of the wind turbine 2, and forms a canopy interior space 20_int. The canopy 20 is stationary relative to the rotatable rotor assembly. A cooling airflow C enters the canopy interior 20_int from an intake arrangement 14, which in this case is arranged at the rear of the canopy 20.

In this embodiment, a mantle 10 has been mounted to the canopy 20, so that the mantle 10 is stationary relative to the rotating outer rotor 22, and forms a concentric volume between the outer surface of the outer rotor 22 and the inner surface of the mantle 10. To prevent moisture and airborne particles from entering the wind turbine interior spaces, a labyrinth seal 16 arranged between the upwind edge of the mantle 10 and the outer rotor 22. At the non-drive-end of the generator 3, a gap 11B or opening 11B acts as a connecting passage between canopy 20 and outer rotor 22 and allows the cooling airflow C to enter the mantle cavity 10_int.

The mantle 10 forms a cylindrical enclosure about the outer rotor 22, and is sufficiently far outward from the outer rotor to allow a suitable volume of cooling air C to pass from the non-drive-end to the drive-end of the mantle cavity 10_int. Openings 11F formed towards the front edge of the outer rotor 22 allow the cooling airflow C to enter a front-end cavity 22_int defined by the outer rotor 22 and the stator frontplate 31F. In this embodiment, a guide 13 in the form of a skirt 13 or flap 13 is positioned to make the cooling airflow C initially pass over the winding overhang 310F, so that the cooling airflow C must then pass through the front-end winding overhang in order to enter the airgap G. This airflow guide 13 can comprise a single annular component, or can comprise several portions arranged at appropriate locations about the front-end of the generator 3.

Windings 310 are arranged in winding slots of the stator 31 to face the rotor magnets 30 across a narrow airgap G. The windings 310 fold over at the drive end DE and the non-drive end of the stator 31 in winding overhangs 310F, 310B. Cooling airflows C are guided from each end of the stator through the winding overhangs 310F, 310B and into the airgap G. The airflow further cools the windings 310 as it passes along the airgap G. The warmed air H then passes through the radial air ducts 313 into the stator interior 31_int.

At the non-drive-end of the generator 3, the brake plate 301 acts as a guide to compel part of the cooling airflow C to pass through the non-drive-end winding overhang 310B in order to enter the airgap G.

The hot air H leaves the stator interior 31_int through an opening 120 in the backplate 31B, which feeds the hot air H to an exit duct 12. The exit duct 12 leads to the exterior of the wind turbine 2.

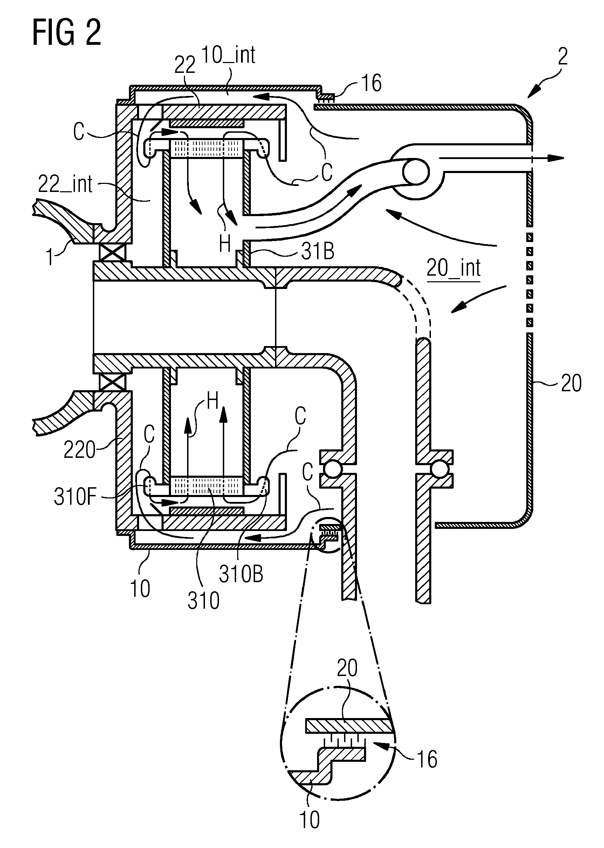

Fig. 2 shows a further embodiment, differing from the embodiment of Fig. 1 by the manner in which the mantle 10 is mounted to the wind turbine 2. Here, the mantle 10 has been mounted to the outer rotor 22, and the diagram shows a labyrinth seal 16 arranged between the mantle 10 and the outer rotor 22. An enlarged view of the seal 16 is also shown, indicating one possible seal design. Here also, the seal 16 serves to prevent moisture and particles from entering the interior space 20_int.

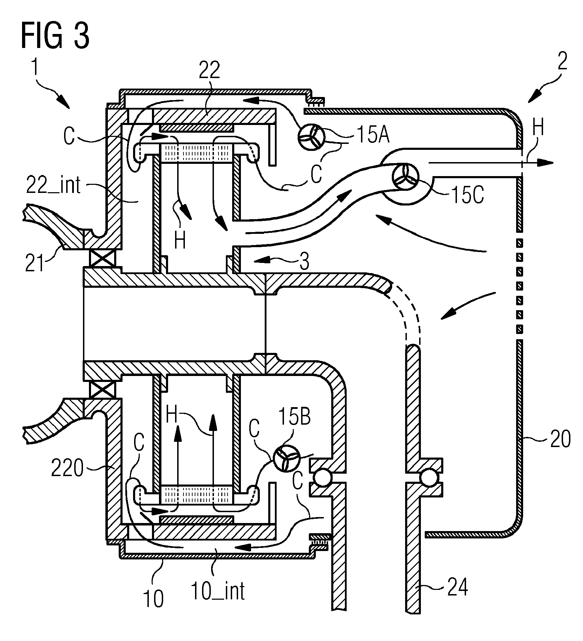

Fig. 3 shows how various fans may be incorporated into the cooling arrangement 1 to accelerate the airflow. An intake fan 15A speeds up the cool air C on its way to the mantle cavity 10_int. Another intake fan speeds up the cool air C on its way through the non-drive-end winding overhang 310B. An extractor fan 15C can suck or draw the hot air H out of the stator interior 31_int and into the exit duct 12 to speed its path to the outside. One or more of these fans could be used to augment the cooling arrangement.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A cooling arrangement (1) of a wind turbine generator (3) having an outer rotor (22) arranged about a stator (31) mounted to a shaft (23) by means of a drive-end stator plate (31F) and a non-drive-end stator plate (31B), which cooling arrangement (1) comprises
- an annular outer mantle (10) arranged about the outer rotor (22) to form an mantle cavity (10_int) between the mantle (10) and the outer rotor (22);
- a number of air ducts (313) in the body of the stator (31) extending from a generator air-gap (G) into a stator interior cavity (31_int); and
- an intake path leading a cooling airflow (C) into the mantle cavity (10_int), from the mantle cavity (10_int) into the generator air-gap (G), and through the stator air ducts (313) into the stator interior cavity (31_int).

2. A cooling arrangement according to claim 1, comprising a connecting passage (11F) connecting the mantle cavity (10_int) with the generator air-gap (G).

3. A cooling arrangement according to claim 2, wherein the connecting passage (11F) comprises a number of outer rotor openings (11F) at the drive-end (DE) of the outer rotor (22), wherein a drive-end outer rotor opening (11F) opens into a front-end cavity (22_int) between the outer rotor (22) and the drive-end stator plate (31F).

4. A cooling arrangement according to any of the preceding claims, comprising an airflow guide (13, 301) arranged to guide a cooling airflow (C) over a winding overhang (310F, 310B).

5. A cooling arrangement according to claim 4, wherein an airflow guide (13) comprises a skirt (13) arranged to guide a cooling airflow (C) from the mantle cavity (10_int) over a drive-end winding overhang (310F).

6. A cooling arrangement according to claim 4 or claim 5, wherein an airflow guide (301) comprises a brake plate (301) arranged to guide a cooling airflow (C) from an interior space (20_int) of the wind turbine (2) through a non-drive-end winding overhang (310B).

7. A cooling arrangement according to any of the preceding claims, comprising an extraction assembly (12, 120) arranged to draw the heated airflow (H) out of the stator interior cavity (31_int).

8. A cooling arrangement according to any of the preceding claims, comprising an intake path leading a cooling airflow (C) into the generator air-gap (G) from the non-drive end (NDE) of the generator (3).

9. A cooling arrangement according to any of the preceding claims, comprising an air intake assembly (14, 140) arranged to introduce cool air (C) into an interior space (20_int) of the wind turbine (2).

10. A cooling arrangement according to any of the preceding claims, wherein the extraction assembly (12, 120) comprises an exit duct (12) arranged to provide a closed passageway (12) for the heated airflow (H) from a non-drive-end stator plate opening (120) to the exterior of the wind turbine (2).

11. A cooling arrangement according to any of the preceding claims, comprising
- an intake fan (15A) arranged to draw the cooling airflow (C) towards the mantle cavity (10_int) and/or
- an intake fan (15B) arranged to draw the cooling airflow (C) towards the generator air-gap (G) and/or
- an extraction fan (15C) draw the heated airflow (H) out of the stator interior cavity (31_int).

12. A direct-drive wind turbine (2) with a generator (3) comprising an outer rotor (22) arranged about a stator (31) mounted to a shaft (23) by means of a drive-end stator plate (31F) and a non-drive-end stator plate (31B), and further comprising a cooling arrangement (1) according to any of claims 1 to 11 to cool the generator (3).

13. A direct-drive wind turbine according to claim 12, comprising a seal (16) between the mantle (10) and a wind turbine canopy (20) when the mantle (10) is mounted to the outer rotor (22), or comprising a seal (16) between the mantle (10) and the outer rotor (22) when the mantle (10) is mounted to the wind turbine canopy (20).

14. A direct-drive wind turbine according to claim 12 or claim 13, wherein the annular outer mantle (10) is constructed of sheet metal.

15. A method of cooling a wind turbine generator (3) having an outer rotor (30) arranged about a stator (31) that is mounted to a shaft (23) by means of a drive-end stator plate (31F) and a non-drive-end stator plate (31B), which method comprises the steps of
- arranging an annular outer mantle (10) about the outer rotor (22) to form an mantle cavity (10_int) between the mantle (10) and the outer rotor (22);
- forming a number of air ducts (313) in the body of the stator (31) to extend from a generator air-gap (G) into a stator interior cavity (31_int); and
- providing an intake path to lead a cooling airflow (C) into the mantle cavity (10_int), from the mantle cavity (10_int) into the generator air-gap (G), and through the stator air ducts (313) into the stator interior cavity (31_int).
